# EUROPEAN PATENT APPLICATION

(11) **EP 3 373 235 A2**
(43) Date of publication of application: **12.09.2018**
(21) Application number: 18161117.9
(22) Date of filing: 09.03.2018
(51) Int. Cl.: G06Q 50/18

(54) **SYSTEMS AND METHODS FOR A DIGITAL WILL**

(30) Priority: 10.03.2017 US 201762469826 P
(71) Applicant: LegalZoom.com, Inc., Glendale, CA 91203 (US)
(72) Inventor: HOLT, Craig John, London, EC1V 9BD (GB)
(74) Representative: Fennell, Gareth Charles

(57) **Abstract**

Disclosed are devices, systems, apparatuses, methods, products, and other implementations for the non-linear integration of digital will components and corresponding digital content using an event-driven rule-based engine. One or more beneficiaries, executors, and assets can be identified using a dynamic scrollable mosaic. An event-driven rule-based engine is configured to determine how the one or more assets are distributed to the one or more beneficiaries based on one or more sets of rules. The identification of the one or more beneficiaries, one or more executors, and one or more assets, and the configuration of the event-driven rule-based engine is received from the user in a non-linear fashion. In real-time, a digital will can be generated that specifies how to distribute the one or more assets to the one or more beneficiaries. When a notice of one or more trigger events is received, the digital will can be updated in real-time.

## Description

### CROSS-REFERENCE TO RELATED APPLICATIONS

The present application claims priority to U.S. Provisional Patent Application No. 62/469,826 filed on March 10, 2017, which is incorporated herein by reference in its entirety.

### TECHNICAL FIELD

The present invention is related to optimizing the storage and usage of computer memory and processor performance in digital wills, and more particularly, to systems and methods for the non-linear integration of digital will components.

### BACKGROUND

Will and testament legal service providers generally cater to parents and elderly segments of the population, and as such, use traditional methods and techniques for on-boarding clients and creating a will. However, such methods and techniques fail to meaningfully engage younger segments of the population that are generally more responsive to digital user-experiences.

Further, while online and digital techniques exist for on-boarding clients, such techniques are generally in the form of questionnaires, whereby users laboriously enter information in a linear and sequential process. Such techniques fail to engage users and often result in users abandoning the process altogether.

Younger segments of the population tend to show an increased responsiveness to visually stimulating applications and programs. For example, computer applications and programs that provide photo or video feeds generally capture a user's attention more than applications or programs that are limited to text. However, applications and programs that integrate digital content suffer from several technical drawbacks. For example, some digital content may require a large amount of computer resources, such as memory or processor power, in order to render, such as for example, high-resolution photos or videos. Moreover, digital content is generally provided in the form a sequential or chronological feed. Digital content is not, however, generally provided in a non-linear format in the will and trust on-boarding process.

Accordingly, there is a need for a system and method of non-linear integration of digital will components, such as beneficiaries, assets, and executors, along with their digital content, such as high-resolution photos or videos, using an event-driven rule-based engine in a way that minimizes memory consumption and optimizes processor performance.

### SUMMARY OF THE INVENTION

In various embodiments, the invention provides systems, methods, and apparatuses for the non-linear integration of digital will components and corresponding digital content using an event-driven rule-based engine. According to some embodiments, an identification of one or more beneficiaries and one or more executors can be received at a processor using a dynamic scrollable mosaic. One or more assets associated with a user and for distribution to the one or more beneficiaries can also be received using the dynamic scrollable mosaic. Digital content associated with the one or more beneficiaries, the one or more executors, and the one or more assets can also be received using the dynamic scrollable mosaic. An event-driven rule-based engine is configured to determine how the one or more assets are distributed to the one or more beneficiaries based on one or more sets of rules. According to some aspects of the invention, a user identifies the one or more beneficiaries, one or more executors, and one or more assets, and configures the event-driven rule-based engine in a non-linear fashion. In real-time, a digital will can be generated that specifies how to distribute the one or more assets to the one or more beneficiaries using the event-driven rule-based engine. When a notice of one or more trigger events is received, the digital will can be updated in real-time based on the one or more trigger events.

According to some embodiments, the dynamic scrollable mosaic can convert media associated with the digital content into memory-optimized formatted media. The memory-optimized formatted media can then be displayed to a user for viewing or editing.

The identification of one or more beneficiaries can include identifying data that represents a family unit. The family unit can comprise one or more family members, and information describing a relationship between the one or more beneficiaries and a first user.

According to some embodiments of the invention, the method includes receiving, at a processor, an identification of one or more guardians, or other individuals named in the digital will.

According to some embodiments, a vault is created for each beneficiary named in the digital will as receiving an asset. The vault can be secured and enable a user to store information pertaining to the received asset. It can further enable a beneficiary to view the information pertaining to the received asset.

According to some embodiments, it can be determined that information of a digital will component exists in a database. It can also be determined that information of a digital will component exists in a social media network. Upon confirming that information of a digital will component exists in a database or social media network, the information of the digital will component can be automatically incorporated into the information of the digital will component and into the digital will.

According to some embodiments, digital content can be associated with metadata. The digital content can be displayed in a selectable storyline according to its associated metadata.

According to some embodiments, digital content can be shared with the one or more beneficiaries based on a trigger event and one or more sets of rules.

According to some embodiments, an update to the digital will can be requested based upon a trigger event and one or more sets of rules. Updates to add, remove, or edit one or more beneficiaries can be received. Upon receipt, the user can be requested to update the digital content, assets, or distributions relating to the updated one or more beneficiaries.

According to some embodiments, updates related to a digital will component can be received. The digital will can then attempt to transmit the updates to a database. If circumstances such as poor internet connectivity prevent the digital will from connecting to the database, it can be determined that the processor is unable to transmit the updates to the database. The digital will can then store the updates in a persistent memory storage coordinator until the processor determines it is capable of transmitting the updates to the database. The persistent memory storage coordinator can be configured to incorporate last-saved values of a digital will component as a managed object. The managed object can be stored in a local file.

According to some embodiments, a request to submit the digital will to a legal service provider for review can be received. The digital will can then be transmitted to the legal service provider for further review, which can include non-legal review or review by one or more licensed attorneys. After reviewing the digital will, the legal service provider can send an approved electronic document back to the user. Upon receipt of the approved electronic document, the user can provide a signature to the digital will. In some embodiments, the digital will can be signed without review or approval from the legal service provider. The signed digital will can then be stored as an electronic document in a vault.

According to some embodiments, a communication from a consultant regarding the one or more trigger events can be received in real-time. The digital will can then be updated in real-time based on the communication from the consultant.

### BRIEF DESCRIPTION OF THE DRAWINGS

To facilitate further description of the embodiments, the following drawings are provided in which:
Figure 1 illustrates a front elevation view of a computer system that is suitable for implementing at least part of a central computer system;
Figure 2 illustrates a representative block diagram of exemplary elements included on the circuit boards inside a chassis of the computer system of Figure 1;

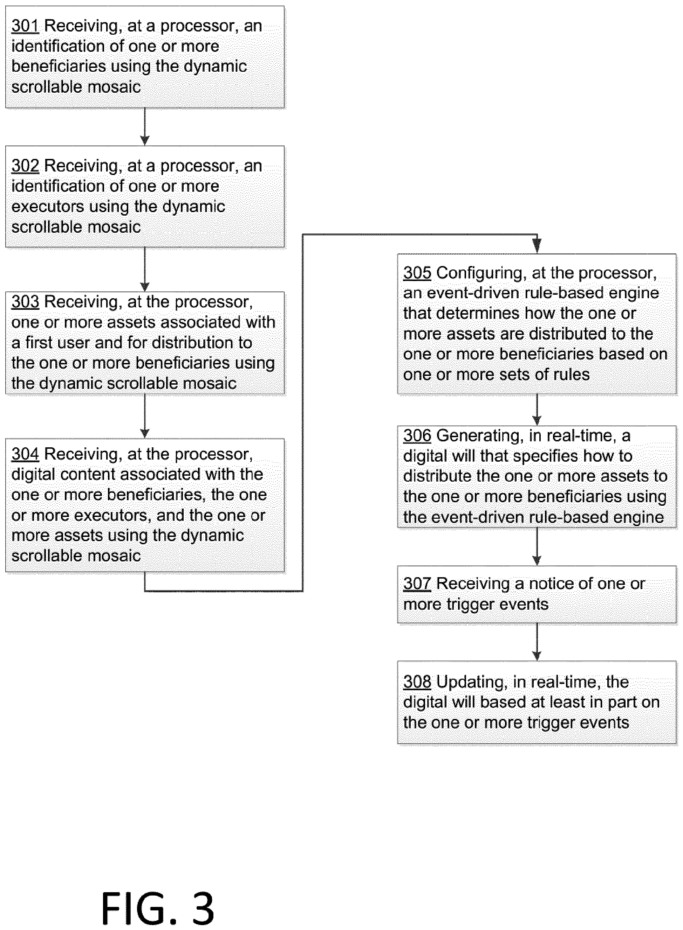

Figure 3 illustrates an exemplary method for non-linear integration of digital will components and corresponding digital content using an event-driven rule-based engine having a dynamic scrollable mosaic according to embodiments of the invention;
Figures 4A, 4B, 4C, 4D and 4E illustrate a means for viewing and identifying beneficiaries, one or more executors, one or more guardians, one or more assets, funeral wishes, and donations according to embodiments of the invention;
Figure 5 illustrates a user interface for visually identifying beneficiaries, executors, guardians, trustees, and other individuals to be named in the digital will with digital content according to embodiments of the invention;
Figure 6 illustrates a user interface for visually identifying individuals relevant to the digital will with digital content according to embodiments of the invention;
Figures 7A, 7B, and 7C illustrate user interfaces for creating and viewing one or more digital memories or digital mementos with digital content according to embodiments of the invention;
Figure 8 illustrates a user interface for creating and viewing one or more digital memories or digital mementos with digital content according to other embodiments of the invention;
Figure 9 illustrates a user interface for creating and viewing one or more digital memories or digital mementos with digital content according to other embodiments of the invention;
Figure 10 illustrates a user interface for viewing, creating, removing, and editing assets to a digital will according to embodiments of the invention;
Figure 11 illustrates a user interface for viewing, creating, removing, and editing distributions of assets to designated beneficiaries according to embodiments of the invention;
Figure 12 illustrates a user interface for viewing, creating, removing, and editing distributions of assets to designated beneficiaries according to other embodiments of the invention;
Figure 13 illustrates a user interface for viewing, creating, removing, and editing digital will components implicated by a beneficiary according to embodiments of the invention;
Figure 14 illustrates a user interface for viewing, creating, removing, and editing digital will components implicated by a beneficiary according to other embodiments of the invention;
Figure 15 illustrates a user interface for providing a signature to a digital will according to embodiments of the invention; and
Figure 16 illustrates a user interface for viewing, creating, removing, and editing digital will formalities according to embodiments of the invention.

For simplicity and clarity of illustration, the drawing figures illustrate the general manner of construction, and descriptions and details of well-known features and techniques may be omitted to avoid unnecessarily obscuring the present disclosure. Additionally, elements in the drawing figures are not necessarily drawn to scale. For example, the dimensions of some of the elements in the figures may be exaggerated relative to other elements to help improve understanding of embodiments of the present disclosure. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "include," and "have," and any variations thereof, are intended to cover a non-exclusive inclusion, such that a process, method, system, article, device, or apparatus that comprises a list of elements is not necessarily limited to those elements, but may include other elements not expressly listed or inherent to such process, method, system, article, device, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the apparatus, methods, and/or articles of manufacture described herein are, for example, capable of operation in other orientations than those illustrated or otherwise described herein.

The terms "couple," "coupled," "couples," "coupling," and the like should be broadly understood and refer to connecting two or more elements mechanically and/or otherwise. Two or more electrical elements may be electrically coupled together, but not be mechanically or otherwise coupled together. Coupling may be for any length of time, e.g., permanent or semi-permanent or only for an instant. "Electrical coupling" and the like should be broadly understood and include electrical coupling of all types. The absence of the word "removably," "removable," and the like near the word "coupled," and the like does not mean that the coupling, etc. in question is or is not removable.

As defined herein, "approximately" can, in some embodiments, mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

### DETAILED DESCRIPTION OF EXAMPLES OF EMBODIMENTS

Some embodiments include a system. In many embodiments, the system can comprise one or more processing modules and one or more non-transitory storage modules storing computing instructions configured to run on the one or more processing modules and perform acts. In many embodiments, the acts can comprise receiving, at a processor, data from one or more information sources associated with a first user, wherein the data is associated with one or more items, and generating, in real-time, a document distributing the one or more items to one or more second users based at least in part on the data received. In many embodiments, the acts can further comprise receiving a notice of one or more trigger events and updating, in real-time, the document based at least in part on the one or more trigger events.

Many embodiments can comprise a method. In some embodiments, the method can comprise receiving, at a processor, data from one or more information sources associated with a first user, wherein the data is associated with one or more items, and generating, in real-time, a document distributing the one or more items to one or more second users based at least in part on the data received. In many embodiments, the method can further comprise receiving a notice of one or more trigger events and updating, in real-time, the document based at least in part on the one or more trigger events.

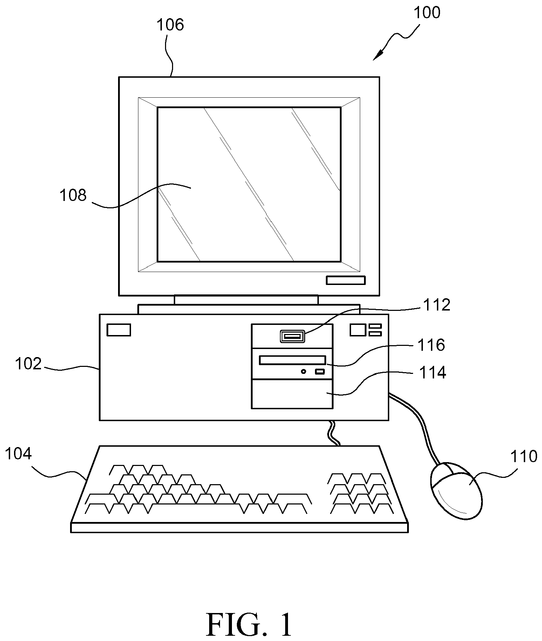

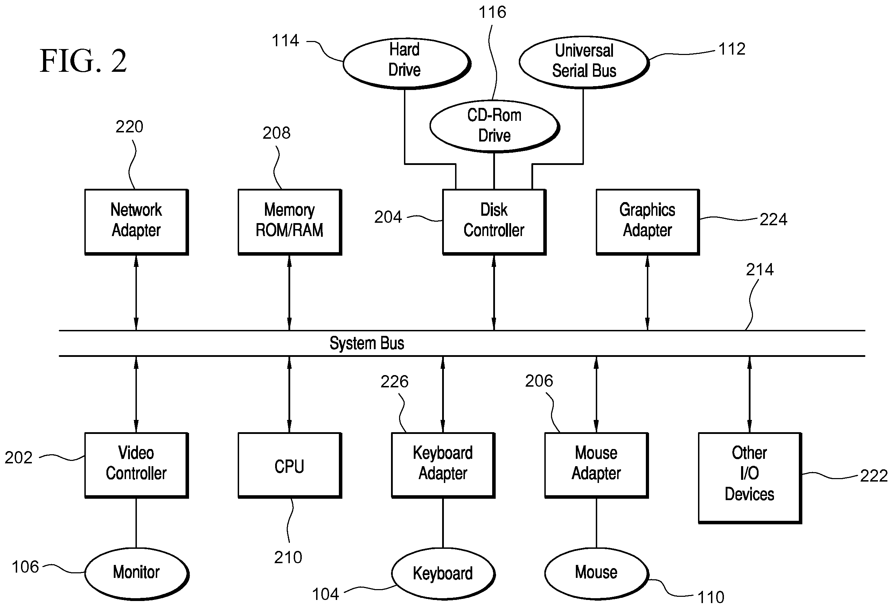

Turning to the drawings, Figure 1 illustrates an exemplary embodiment of a computer system 100, all of which or a portion of which can be suitable for (i) implementing part or all of one or more embodiments of the techniques, methods, and systems and/or (ii) implementing and/or operating part or all of one or more embodiments of the memory storage modules described herein. As an example, a different or separate one of a chassis 102 (and its internal components) can be suitable for implementing part or all of one or more embodiments of the techniques, methods, and/or systems described herein. Furthermore, one or more elements of computer system 100 (e.g., a monitor 106, a keyboard 104, and/or a mouse 110, etc.) also can be appropriate for implementing part or all of one or more embodiments of the techniques, methods, and/or systems described herein. Computer system 100 can comprise chassis 102 containing one or more circuit boards (not shown), a Universal Serial Bus (USB) port 112, a Compact Disc Read-Only Memory (CD-ROM) and/or Digital Video Disc (DVD) drive 116, and a hard drive 114. A representative block diagram of the elements included on the circuit boards inside chassis 102 is shown in Figure 2. A central processing unit (CPU) 210 in Figure 2 is coupled to a system bus 214 in Figure 2. In various embodiments, the architecture of CPU 210 can be compliant with any of a variety of commercially distributed architecture families.

Continuing with Figure 2, system bus 214 also is coupled to a memory storage unit 208, where memory storage unit 208 can comprise (i) non-volatile (e.g., non-transitory) memory, such as, for example, read only memory (ROM) and/or (ii) volatile (e.g., transitory) memory, such as, for example, random access memory (RAM). The non-volatile memory can be removable and/or non-removable non-volatile memory. Meanwhile, RAM can include dynamic RAM (DRAM), static RAM (SRAM), etc. Further, ROM can include mask-programmed ROM, programmable ROM (PROM), one-time programmable ROM (OTP), erasable programmable read-only memory (EPROM), electrically erasable programmable ROM (EEPROM) (e.g., electrically alterable ROM (EAROM) and/or flash memory), etc. The memory storage module(s) of the various embodiments disclosed herein can comprise memory storage unit 208, an external memory storage drive (not shown), such as, for example, a USB-equipped electronic memory storage drive coupled to universal serial bus (USB) port 112 (Figures 1-2), hard drive 114 (Figures 1-2), a CD-ROM and/or DVD for use with a CD-ROM and/or DVD drive 116 (Figures 1-2), floppy disk for use with a floppy disk drive (not shown), an optical disc (not shown), a magneto-optical disc (now shown), magnetic tape (not shown), etc. Further, non-volatile or non-transitory memory storage module(s) refer to the portions of the memory storage module(s) that are non-volatile (e.g., non-transitory) memory.

In various examples, portions of the memory storage module(s) of the various embodiments disclosed herein (e.g., portions of the non-volatile memory storage module(s)) can be encoded with a boot code sequence suitable for restoring computer system 100 (Figure 1) to a functional state after a system reset. In addition, portions of the memory storage module(s) of the various embodiments disclosed herein (e.g., portions of the non-volatile memory storage module(s)) can comprise microcode such as a Basic Input-Output System (BIOS) operable with computer system 100 (Figure 1). In the same or different examples, portions of the memory storage module(s) of the various embodiments disclosed herein (e.g., portions of the non-volatile memory storage module(s)) can comprise an operating system, which can be a software program that manages the hardware and software resources of a computer and/or a computer network. The BIOS can initialize and test components of computer system 100 (Figure 1) and load the operating system. Meanwhile, the operating system can perform basic tasks such as, for example, controlling and allocating memory, prioritizing the processing of instructions, controlling input and output devices, facilitating networking, and managing files. Exemplary operating systems can comprise one of the following: (i) Microsoft® Windows® operating system (OS) by Microsoft Corp. of Redmond, Washington, United States of America, (ii) Mac® OS X by Apple Inc. of Cupertino, California, United States of America, (iii) UNIX® OS, and (iv) Linux® OS. Further exemplary operating systems can comprise one of the following: (i) the iOS® operating system by Apple Inc. of Cupertino, California, United States of America, (ii) the Blackberry® operating system by Research In Motion (RIM) of Waterloo, Ontario, Canada, (iii) the WebOS operating system by LG Electronics of Seoul, South Korea, (iv) the Android™ operating system developed by Google, of Mountain View, California, United States of America, (v) the Windows Mobile™ operating system by Microsoft Corp. of Redmond, Washington, United States of America, or (vi) the Symbian™ operating system by Accenture PLC of Dublin, Ireland.

As used herein, "processor" and/or "processing module" means any type of computational circuit, such as but not limited to a microprocessor, a microcontroller, a controller, a complex instruction set computing (CISC) microprocessor, a reduced instruction set computing (RISC) microprocessor, a very long instruction word (VLIW) microprocessor, a graphics processor, a digital signal processor, or any other type of processor or processing circuit capable of performing the desired functions. In some examples, the one or more processing modules of the various embodiments disclosed herein can comprise CPU 210.

In the depicted embodiment of Figure 2, various I/O devices such as a disk controller 204, a graphics adapter 224, a video controller 202, a keyboard adapter 226, a mouse adapter 206, a network adapter 220, and other I/O devices 222 can be coupled to system bus 214. Keyboard adapter 226 and mouse adapter 206 are coupled to keyboard 104 (Figures 1-2) and mouse 110 (Figures 1-2), respectively, of computer system 100 (Figure 1). While graphics adapter 224 and video controller 202 are indicated as distinct units in Figure 2, video controller 202 can be integrated into graphics adapter 224, or vice versa in other embodiments. Video controller 202 is suitable for monitor 106 (Figures 1-2) to display images on a screen 108 (Figure 1) of computer system 100 (Figure 1). Disk controller 204 can control hard drive 114 (Figures 1-2), USB port 112 (Figures 1-2), and CD-ROM drive 116 (Figures 1-2). In other embodiments, distinct units can be used to control each of these devices separately.

Network adapter 220 can be suitable to connect computer system 100 (Figure 1) to a computer network by wired communication (e.g., a wired network adapter) and/or wireless communication (e.g., a wireless network adapter). In some embodiments, network adapter 220 can be plugged or coupled to an expansion port (not shown) in computer system 100 (Figure 1). In other embodiments, network adapter 220 can be built into computer system 100 (Figure 1). For example, network adapter 220 can be built into computer system 100 (Figure 1) by being integrated into the motherboard chipset (not shown), or implemented via one or more dedicated communication chips (not shown), connected through a PCI (peripheral component interconnector) or a PCI express bus of computer system 100 (Figure 1) or USB port 112 (Figure 1).

Returning now to Figure 1, although many other components of computer system 100 are not shown, such components and their interconnection are well known to those of ordinary skill in the art. Accordingly, further details concerning the construction and composition of computer system 100 and the circuit boards inside chassis 102 are not discussed herein.

Meanwhile, when computer system 100 is running, program instructions (e.g., computer instructions) stored on one or more of the memory storage module(s) of the various embodiments disclosed herein can be executed by CPU 210 (Figure 2). At least a portion of the program instructions, stored on these devices, can be suitable for carrying out at least part of the techniques and methods described herein.

Further, although computer system 100 is illustrated as a desktop computer in Figure 1, there can be examples where computer system 100 may take a different form factor while still having functional elements similar to those described for computer system 100. In some embodiments, computer system 100 may comprise a single computer, a single server, or a cluster or collection of computers or servers, or a cloud of computers or servers. Typically, a cluster or collection of servers can be used when the demand on computer system 100 exceeds the reasonable capability of a single server or computer. In certain embodiments, computer system 100 may comprise a portable computer, such as a laptop computer. In certain other embodiments, computer system 100 may comprise a mobile electronic device, such as a smartphone. In certain additional embodiments, computer system 100 may comprise an embedded system.

The methods and systems described herein provide a digitally engaging user experience that integrates rich digital content while simultaneously reducing memory consumption and optimizing processor performance. By enabling users to provide the components of a digital will in a non-linear fashion and while simultaneously providing a visually engaging experience, the methods and systems described herein encourage various segments of the population to complete a digital will much earlier in life than they might otherwise have done.

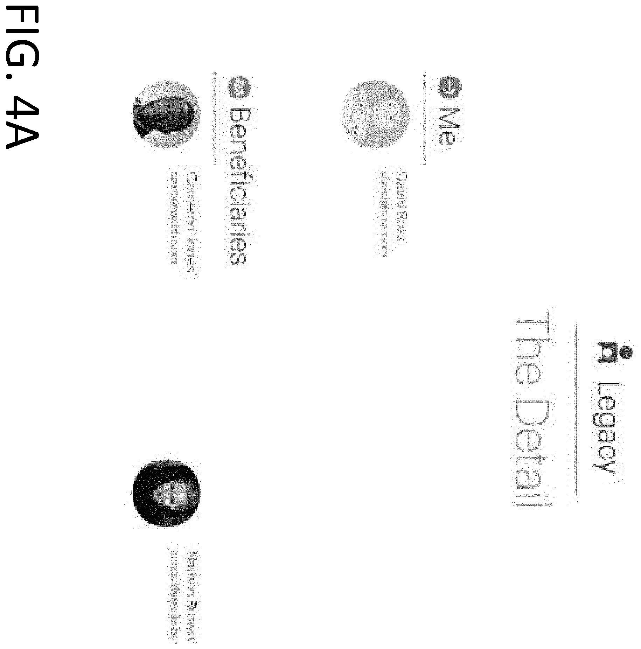

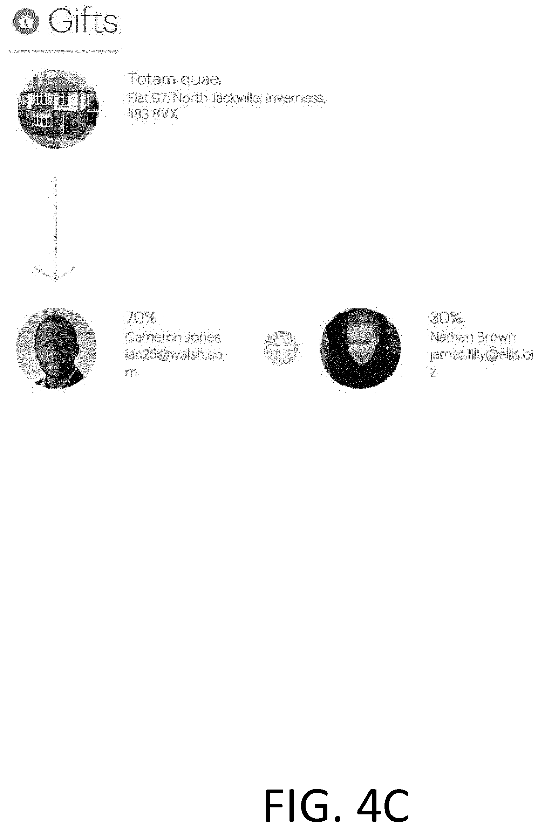

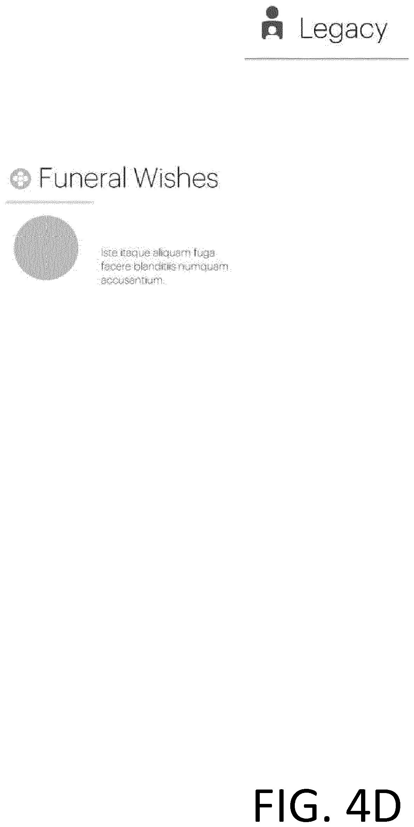

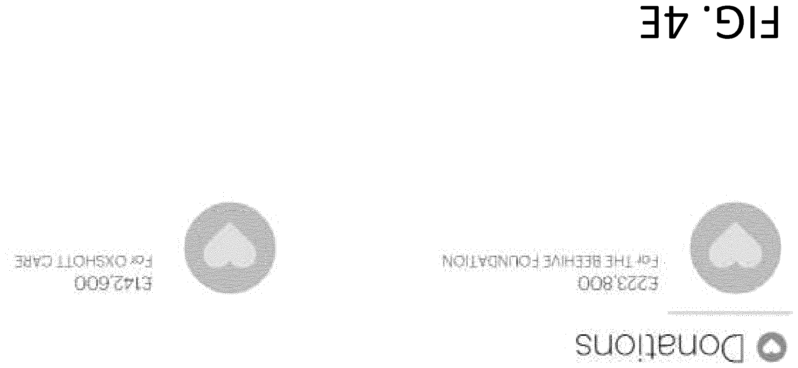

In some embodiments, a digital will can include one or more beneficiaries, one or more executors, and one or more assets. As shown in Figures 4A-4E, beneficiaries can include family members, friends, charitable foundations, institutions, and any other similar entity that can receive an asset as a bequest. For example, as shown in Figure 4E a beneficiary can be a non-profit organization dedicated to an initiative or cause of importance to the first user receiving gifts in the form of donations. Beneficiaries can also include unborn children or grandchildren. A user can identify one or more beneficiaries by providing data representative of a family unit. The data representative of a family unit can include one or more family members, and information describing a relationship between the one or more beneficiaries and the user, such as for example, a genealogical relationship.

Executors can be individuals, or corporate entities. For example, an executor can be a law firm, attorney, friend, bank, legal service, or anyone else legally eligible. Executors can also include replacement executors, in the event that the named executors are unable or unwilling to act.

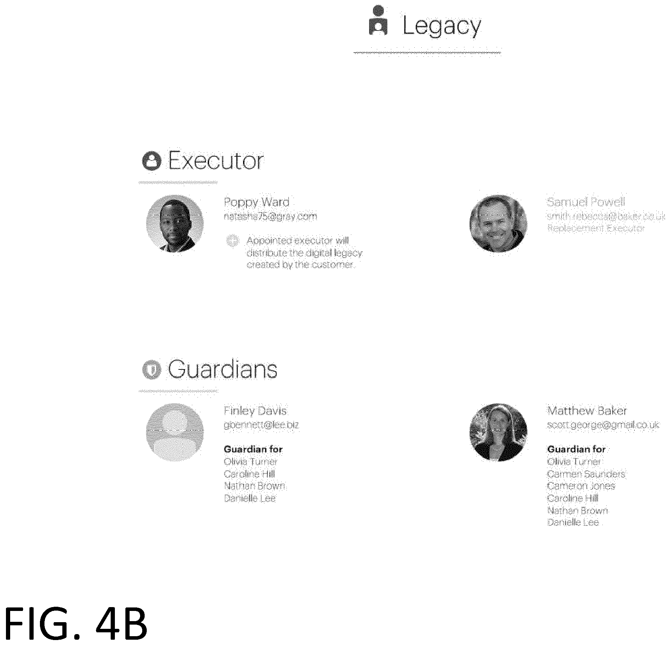

A digital will can also include guardians and trustees as shown in Figure 4B. Guardians will assume guardianship over any children under a specified age, and trustees will administer and manage any assets named in a trust. Guardians and trustees can include replacement guardians and trustees in the event that the named guardians and trustees are unable or unwilling to act.

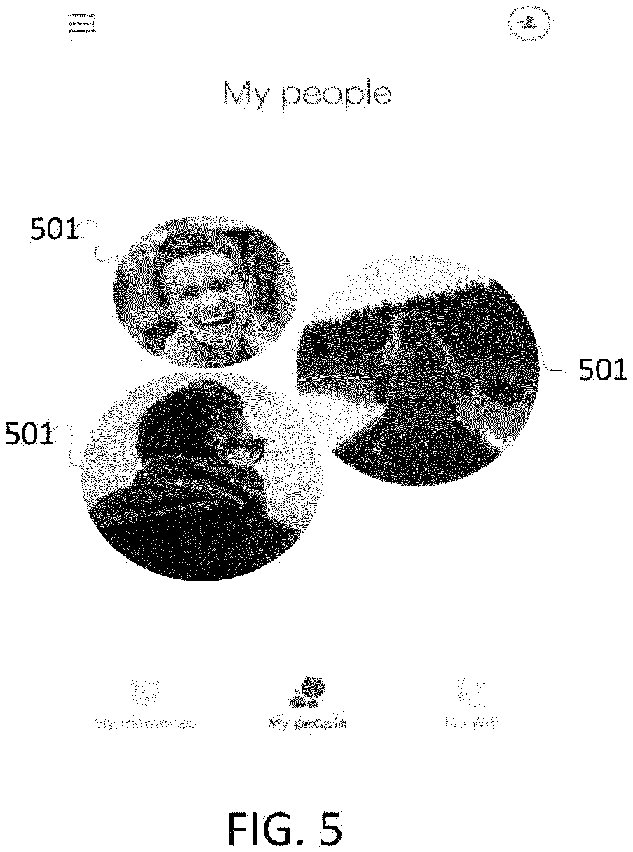

In some embodiments of the invention, the digital will provides a user interface as shown in Figure 5 that enables the user to visually identify beneficiaries, executors, guardians, trustees, and other individuals to be named in the digital will with digital content using graphics rendering objects 501. Graphics rendering objects display images, sequences of images, videos, audio, and similar media on a user interface. For example, a graphics rendering object can display an image of a beneficiary. The graphics rendering object can be configured to take on different shapes, such as for example, spheres, bubbles, squares, and other geometrical representations.

The graphics rendering object has one or more properties and settings that control how the media is displayed in relation to its shape, the dimensions of the user's display, and other objects being rendered in the scene. For example, the media can be automatically scaled to fit all or some of the available space on the screen of the user's device. If the size of the scene changes, the media can automatically scale with it as needed. As another example, a property or setting may correspond to how media scales in a scene while maintaining its original aspect ratio.

The graphics rendering object can be programmed with animations and similar visual effects that simulate physics-based properties of the real-world. For example, a graphics rendering object can be in the shape of a bubble and configured with bouncing and wobbling visual effects so that when animated it gives the appearance of a bubble bouncing or wobbling in the scene rendered on the user's display.

Graphics rendering objects can be configured with properties and characteristics that control the physics of a particular scene. For example, properties can be set to control the gravity, velocity or acceleration of objects within the scene. Delegates can be set to create notifications when objects intersect or come into contact with each other. Graphics rendering objects can be implemented with graphics APIs for communicating to graphics hardware, such as OpenGL or SpriteKit.

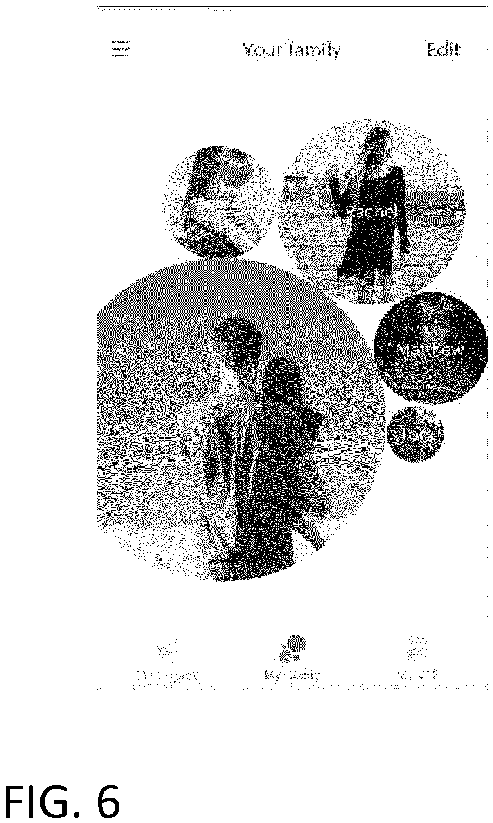

As shown in Figures 4A-4E, 5, and 6, a user interface can include a page that enables a user to visually identify individuals relevant to the digital will with digital content. For example, a user may upload a picture of a beneficiary and input biographic information (e.g., name, marital status, number of kids, state of residence, and similar information) about the beneficiary. The same can be done for executors, guardians, trustees, and other individuals to be named in the digital will. In some embodiments, the digital will can determine that information of a digital will component exists in an external network or database, such as media and biographic information relating to a beneficiary, and retrieve the information from the external network or database. For example, the digital will may retrieve media and biographic information about the beneficiary from the user's social media networks, such as Facebook or Linkedln, and pre-populate the page with the information retrieved from the social media networks. The user can then accept or change the media or information provided from the social media networks. The digital will may also retrieve media and biographic information from a mobile device. For example, the user can take a photo or video from a camera on the user's smartphone to identify an individual. The user can also create media to be used for representing an individual. For example, a user can generate an avatar, bitmoji, drawing, painting, or similar artwork to be used as a representation of an individual.

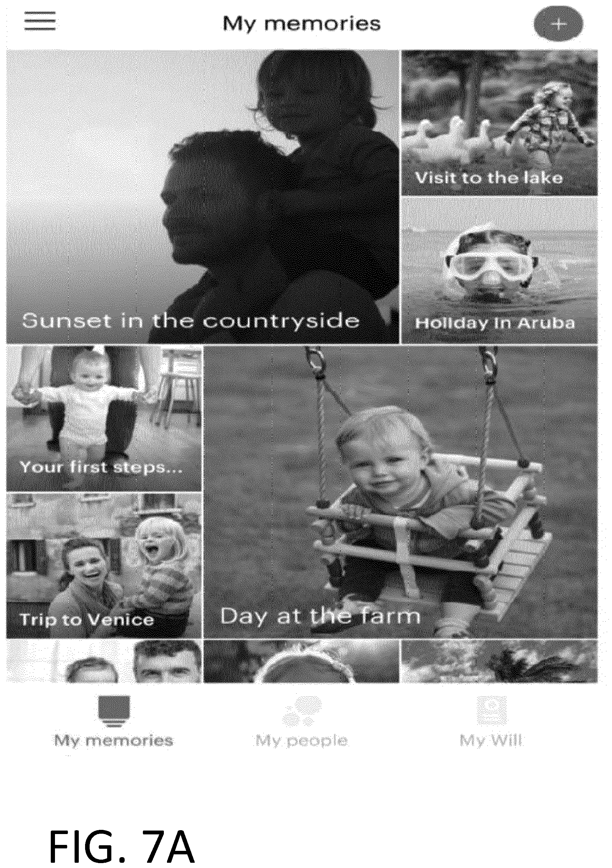

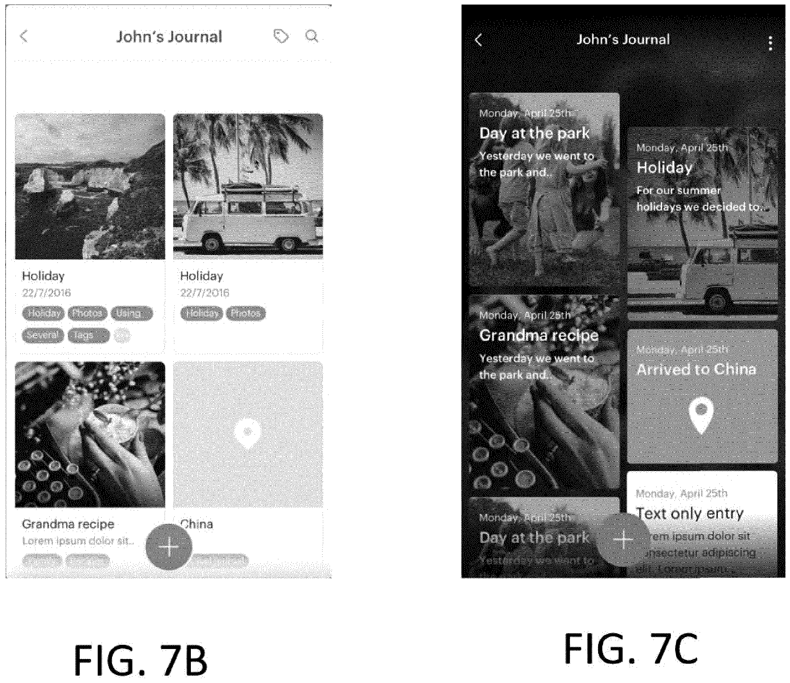

The graphics rendering object can respond to user interactions. For example, a user can tap on a bubble depicting an image of a beneficiary, which causes a storyline to be displayed as shown in Figure 7. The storyline can be a chronologically ordered sequence of images, videos, audio, or other media that are associated with that beneficiary as digital memories. As explained in more detail below, graphics rendering objects can also be used to display digital memories and digital mementos.

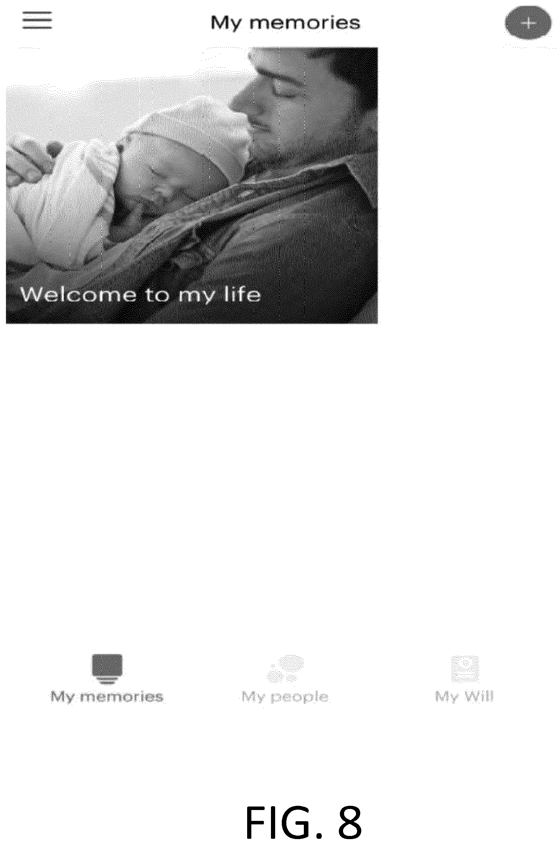

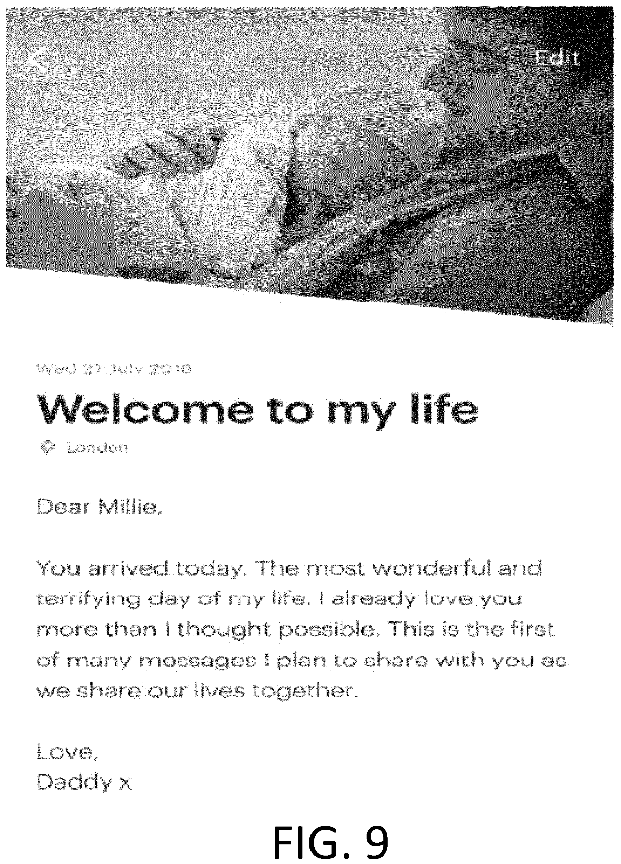

A digital will can provide a user interface enabling the user to create one or more digital memories or digital mementos with digital content that can be associated with assets, beneficiaries, executors, guardians, trustees, and other individuals and things that are named in the digital will. Exemplary user interfaces for creating one or more digital memories or digital mementos with digital content are shown in Figures 7A, 7B, 7C, 8, and 9. Digital memories and digital mementos can be images, sequences of images, videos, audio, digital notes, and similar media or files depicting, describing, or relevant to the assets, beneficiaries, executors, guardians, trustees, and other individuals and things that are named in the digital will. For example, a digital memory can be a video at a beneficiary's birthday, or a high-resolution photo of an heirloom that the user has decided to distribute to the beneficiary. Digital memories or digital mementos can be added with a user interface like the page described above that enables a user to visually identify individuals relevant to the digital will. The page for adding digital memories or digital mementos allows a user to upload media and metadata related to the media from a user's device, or an external network or database, such as a social media network.

The user can associate the digital content with other metadata, such as the geographic location, tag, timestamp, or caption that was part of the social media post. The other metadata can be used to create a storyline for a collection of digital memories and digital mementos. For example, the digital memories and digital mementos can be viewed chronologically as a timeline using associated timestamps, or overlaid on a map using associated geographic locations. Storylines can be created for other types of digital content such as beneficiaries or assets in the same manner. A user can select or tap a particular piece of digital content in the storyline, causing the digital will to display a pop-up, menu, or similar window that displays metadata associated with the digital content.

In some embodiments, users can add to and modify the digital memories and digital content over the course of their lifetime, enabling users to create compilations of memories representing significant milestones and cherished moments in sync with the creation and maintenance of a digital will. As described in more detail below, digital memories or digital mementos can be incorporated from third party networks or databases. For example, as a user browses through media on a social media network digital will (e.g., Facebook), the user can add the media to the digital will as a digital memory or digital memento.

As the user increases the number of digital memories or digital mementos added to the digital will, the amount of memory consumed by the computer processor grows significantly and the processor performance of the user's device quickly deteriorates. As a result, interactive functions with the digital will become stuttered, erratic, or altogether broken. For example, scrolling through digital memories and digital mementos becomes less smooth because large amounts of memory are being consumed. To reduce the amount of memory used when viewing digital memories and mementos, a user interface can be provided with a dynamic scrollable mosaic. The dynamic scrollable mosaic compresses or converts the media associated with the one or more digital memories or digital mementos into a memory-optimized format, and uses the memory-optimized media for displaying to a user as he/she scrolls through the digital memories or digital mementos. The memory-optimized media may be, for example, an image compressed or transformed from a high resolution image into a lower resolution, smaller scale, or different file format (e.g., .jpg, .png, or .gif).

A digital will can store digital memories and digital mementos, as well as their corresponding memory-optimized media in a data source for the dynamic scrollable mosaic to retrieve. The dynamic scrollable mosaic uses a collection view object to organize the digital memories, digital mementos, and corresponding memory-optimized media into items and sections for presentation on a display. The collection view object displays the items and sections on the display using a collection view cell object. The collection view object by default matches the visual presentation of the items in the same order they are stored in the data source, however, can be rearranged in accordance with any other predetermined order. Items are added, deleted, or rearranged in the collection view object with the collection view cell object. The collection view object works with a collection view layout object, which is used to define the organization and location of the collection view cell objects inside the collection view. For example, the collection view layout object can position collection view cell objects to be seen as a vertical or horizontal scroll, a scrollspy, a grid, a carousel, or a table.

The dynamic scrollable mosaic uses a collection view object to present digital memories, digital mementos, and corresponding memory-optimized media for display by determining which items in the collection view layout object are visible to the user, and requesting the corresponding collection view cell objects. For example, if there are 100 memory-optimized photos of a user's digital memories, but a user's device can only display the first 5, the dynamic scrollable mosaic requests the first 5 collection view object cells in the collection view object. When a user interacts with the display, by for example, scrolling down for the next digital memories, the dynamic scrollable mosaic requests the next collection view object cells in the corresponding collection view object.

When a user scrolls through the digital memories or digital mementos, the dynamic scrollable mosaic can be configured to only allocate memory for the media that will be displayed, and releases any memory that was previously allocated for media that is no longer being displayed. For example, as the user scrolls the page to see more digital memories or digital mementos, the memory that was allocated for the media that has scrolled off the top or bottom of the screen is immediately released. In this way, the amount of memory used by the digital will is greatly reduced and computer processing performance is not impacted by large data sets.

The dynamic scrollable mosaic can dynamically request the memory-optimized media before it is to be displayed. For example, if a digital memory or digital memento that consumes a large amount of memory (e.g., a high-resolution image or video) is about to be retrieved from the collection view object for display, the dynamic scrollable mosaic can request its memory-optimized version instead. If its memory-optimized version does not yet exist, the dynamic scrollable mosaic can create one in real time, on the fly. It can then be stored in the data source or a cache in case that digital memory or digital memento is requested again.

In some embodiments, the dynamic scrollable mosaic can have a memory usage threshold that limits the amount of memory that can be used to display digital memories or digital mementos, and in turn, determines how the digital memories or digital mementos are displayed. Once a memory usage threshold is set, the dynamic scrollable mosaic calculates how much memory would be needed to display a given number of collection view cell objects. If the amount of memory exceeds the usage threshold, the dynamic scrollable mosaic determines whether any substitutes or changes can be made to, for example, the collection view cell objects or the collection view layout object, in order to reduce the amount of memory needed. For example, the dynamic scrollable mosaic can determine whether substituting one or more digital memories or digital mementos with their corresponding memory-optimized media will lower the memory consumption under the threshold. The substituted memory-optimized media can be, for example, a thumbnail version of a high-resolution image that is smaller in size and resolution, thereby consuming less memory. The dynamic scrollable mosaic can also determine whether resizing, rescaling, or reformatting the one or more digital memories or digital mementos will lower the memory consumption under the threshold. The dynamic scrollable mosaic can also determine whether changing its location in the layout, which in turn changes the location on the display, can lower the memory consumption under the threshold.

In some embodiments, the dynamic scrollable mosaic allows for users to visually interact with the digital memories and digital mementos. For example, a user can tap or select a memory-optimized thumbnail version of a photo, causing the dynamic scrollable mosaic to display a higher resolution version of the image overlaying the rest of the screen. A user can also enlarge portions of the image, or markup and edit image.

If a user selects a memory-optimized version of media, such as for example a thumbnail version of a photo or a clipped version of video, and there is no corresponding high-resolution version of the media stored on the user's device, the dynamic scrollable mosaic can request and download the high-resolution version from a database as discussed in more detail below.

While the dynamic scrollable mosaic has been discussed in reference to the digital memories and digital mementos above, in some embodiments, the dynamic scrollable mosaic can also be used to retrieve and manage corresponding memory-optimized media for the user interfaces that display graphics rendering objects in related to beneficiaries, executors, assets, and other digital will components.

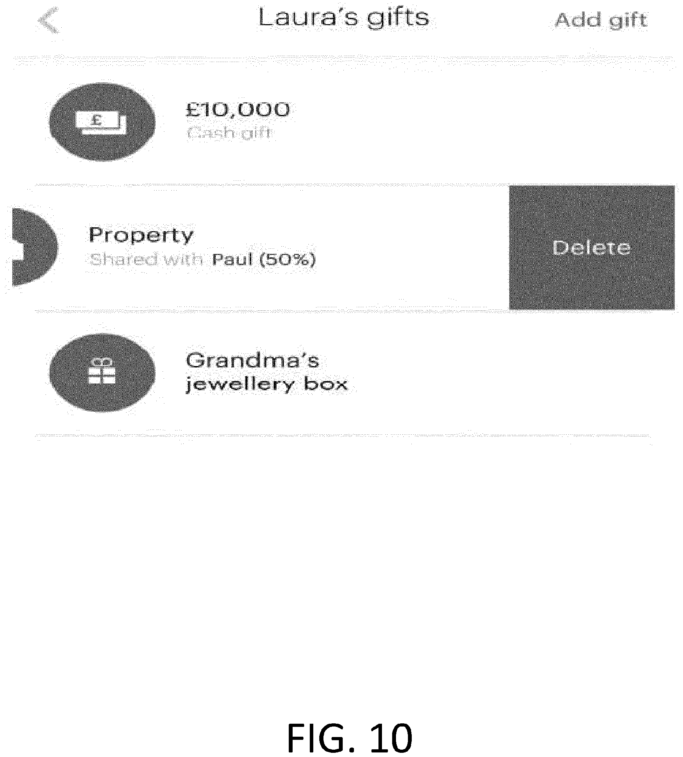

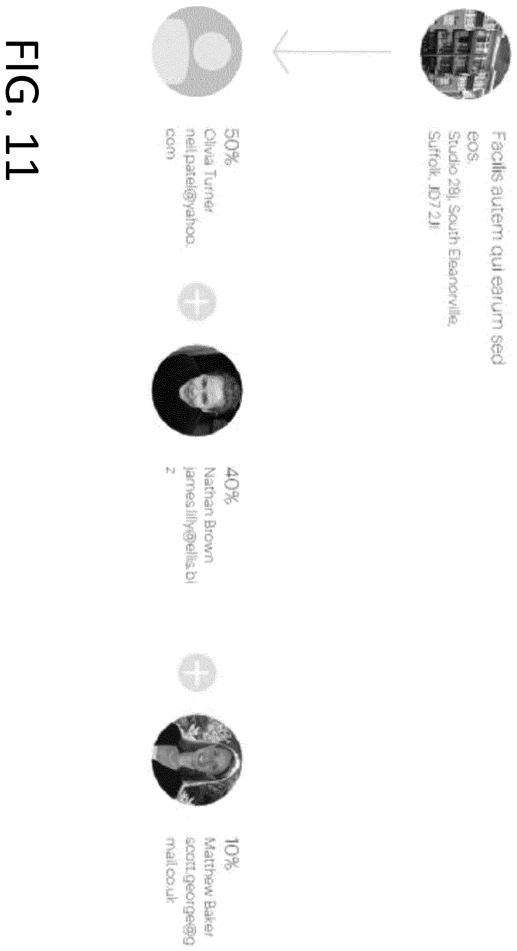

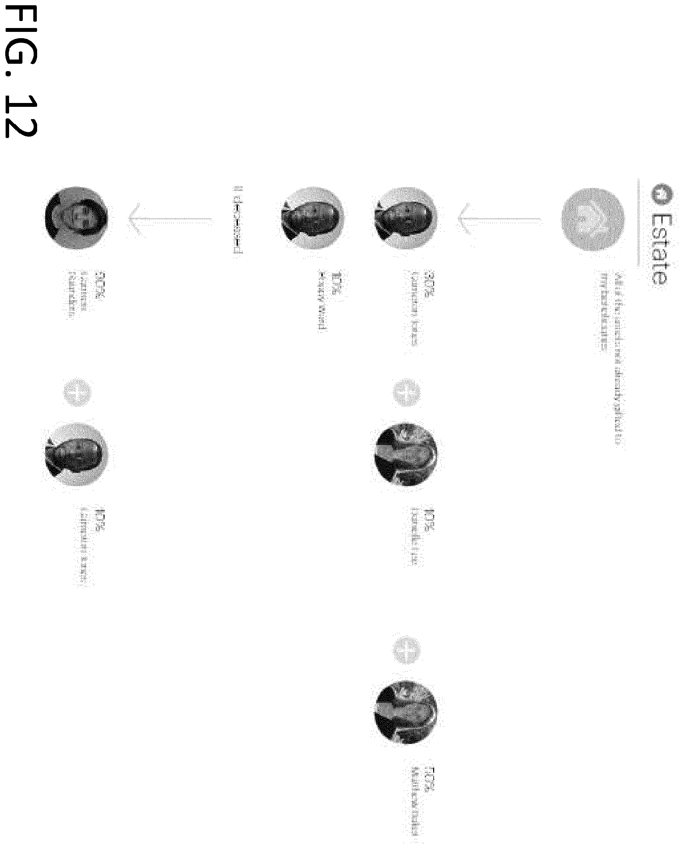

The digital will also includes one or more distributions that determine how one or more assets are distributed to the one or more beneficiaries. The distributions can be specific gifts of property to designated beneficiaries, such as for example, a tangible belonging or a parcel of land that is gifted to a son or daughter as shown in Figures 10, 11, 12. Gifts can also be distributed according to a percentage, formula, or algorithm that is applied to the asset. For example, a bank account or financial portfolio worth $100k can be distributed evenly to a son and daughter (i.e., 50% to each), or by any other predetermined percentage or proportion (e.g., 70% to the son, 30% to the daughter).

Assets can be personal property, real property, intangible property, intellectual property, and other types of property that the user owns or has a stake in. Personal property can include heirlooms, objects and other tangible things that the user can bequeath. Real property can include land, buildings, homes, and other types of real estate that the user can bequeath. Intangible property can include property that the user owns or has a stake in, such as for example, financial accounts or bank accounts, holding investments and/or money, or shares in a company or entity. Intellectual property can include rights in and to patents, copyrights, trademarks and other legal interests. In some embodiments, assets can be distributed as shares of a legal interest. For example, an asset can be an amount of shares in a company, or an interest in a piece of intellectual property. Assets can be added to the digital will with a user interface as shown in Figure 10, which like the page that enables a user to visually identify individuals relevant to the digital will, enables a user to add, remove or edit assets bequeathed to a beneficiary. The page for adding assets allows a user to upload media and metadata related to the asset from a user's device, or an external network or database, such as a social media network or third party site. If an asset is a financial portfolio held by a banking institution, for example, information about the financial portfolio can be retrieved from the banking institution without requiring the user to manually input the details about the financial portfolio.

A user can also specify that one or more digital memories or digital mementos are provided to a beneficiary as an asset itself, or in connection with a bequeathed asset. For example, a user can save his or her treasured and irreplaceable emotional feelings associated with specific family members and/or friends, such as precious life and family events, in the form of digital memories or mementos in a digital will. The user can bequeath not only physical assets to loved ones, but also personalized digital scrapbooks that include these digital memories or mementos. In this way, users can bequeath memories and sentiments to their loved ones, which can be more valuable than physical property being bequeathed.

As assets are distributed to beneficiaries, the digital will can track how much assets remain and how much each beneficiary has received. Remaining assets may be viewed visually with charts (e.g., line, bar, radar, polar, pie or doughnut charts), infographics, or similar icons and displays. For example, a user's assets may be represented as a pie chart showing a percentage of assets that have been distributed, and a percentage of assets that remain. The visual renderings of the assets and beneficiaries may be fully responsive and resize based on the size and dimensions of the user's device and display, to ensure correct scaling and granularity. The visual renderings can also update in real-time in response to user interactions, such as when a user inputs or modifies a distribution of assets, or hovers over or selects a distribution. In response to hovering over or selecting a distribution, the visual rendering can display additional information about the distribution and/or asset, such as the percentage or value of the asset being distributed.

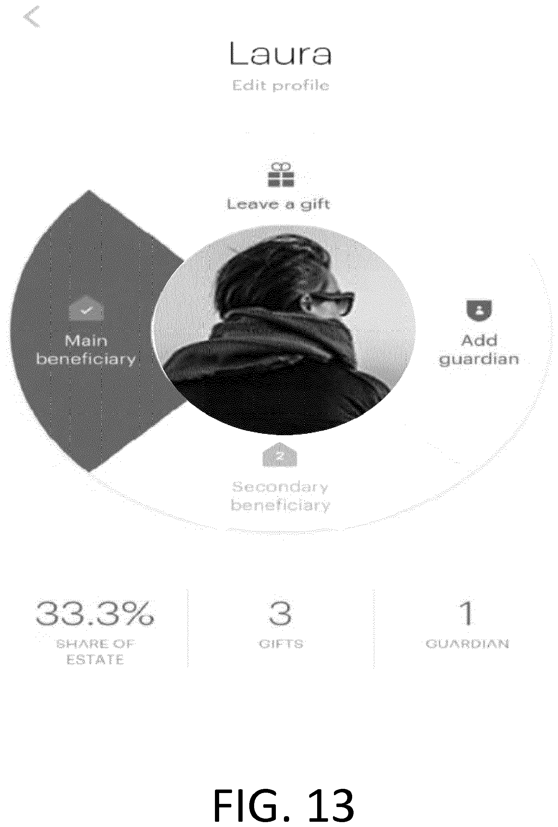

Visual renderings can also be provided for each beneficiary. For example, as shown in Figure 13 a display can show each beneficiary and how much assets each has received. The distributions can be shown as a percentage of the total amount of assets, or the raw value of each asset. Inputs on the display can be provided to enable users to modify the distributions as needed. For example, one or more buttons or sliders can be displayed next to an asset, such as a bank account, and the user can modify the amount of money a beneficiary receives from the bank account by adjusting the buttons or sliders.

In some embodiments of the invention, a distribution can be specified as a hierarchy having several tiers of distribution. Each tier can correspond to a generation of descendants of the user's family, such as for example, immediate children, grandchildren, or great grandchildren. Thus, a user can specify a first tier of distributions to his or her immediate children, and then specify a second tier of distributions to his or her grandchildren or great grandchildren. A user can also specify distributions to unborn generations, such as unborn grandchildren or great grandchildren using the hierarchy.

In some embodiments of the invention, an event-driven rule-based engine can be configured to define trigger events and rules that pertain to the beneficiaries, executors, or assets. For example, a user can use the event-driven rule-based engine to specify how an executor is to hold his or estate with regards to paying debts and expenses, dealing with specific distributions referred to in the digital will, and dealing with any residual estate according to the wishes of the user in the digital will. A user can also use the event-driven rule-based engine to specify how and when the executor shall distribute assets or digital memories and digital mementos with the one or more beneficiaries based on a trigger event and one or more of the rules. The event-driven rule-based engine can also be configured to define trigger events and rules that pertain to the digital memories and digital mementos. For example, unlike common social media posts, a memory or memento can be shared upon a user's death.

A user can also specify how certain trigger events impact the distribution of assets in the digital will, such as for example, if the beneficiary should die before the user, but the beneficiary has left surviving children. A user can also specify how certain conditions apply to the distribution of assets in the digital will, such as for example, a distribution to a child beneficiary under the age of 21. In such circumstances, a rule can be created that identifies a trustee to hold the asset until the child reaches the age of 21. When the beneficiary turns 21, the event-driven rule-based engine will register a trigger event, and may for example prompt the user to redistribute assets to that beneficiary or other individuals. In some embodiments, a prompt may be presented to the user to confirm such redistribution upon receiving the triggering event.

A user can also specify one or more rules applicable to executors. For example, a user can require that an executor be selected from a particular law firm, association, or service, and have certain qualifications, such as two years of experience in handling the types of assets at issue in the digital will. As another example, the user can specify that executors are to act jointly when more than one executor has been appointed. In this way, the event-driven rule-based engine can determine how the assets are distributed to the one or more beneficiaries based on one or more sets of rules.

Trigger events can also cause the event-driven rule-based engine to distribute digital content, such as digital memories or digital mementos to individuals named in the digital will. For example, a user can specify that upon death, a set of digital memories and digital mementos be shared with a beneficiary.

In some embodiments, a user can be prompted to provide an update to the digital will based upon a trigger event and one or more of the rules. For example, if a beneficiary reaches a certain age, the digital will can prompt the user to update or change certain distributions, digital memories, or digital mementos associated with the beneficiary. As another example, a trigger event can be a beneficiary such as a family member of a family unit reaching the age of 18, and the digital will prompts the first user to remove a guardianship provision.

The digital will can receive notices of trigger events thereby causing the event-driven rule based engine to execute one or more rules, or update the digital will in one or more respects. A notice can be received electronically by, for example, e-mail, text, in-app notification, or similar electronic means. A notice can also be generated automatically by the digital will or a legal service provider. For example, trigger events that are dates or times can be saved to calendar modules in the digital will. The calendar modules can use the time and date functions of a user's mobile device, computer, or a third party or digital will server to keep track of the date. The calendar module can detect when the applicable date arrives and send a notification to the digital will. Dates can also be maintained and monitored by the legal service provider; when the applicable date arrives, the legal service provider can similarly send a notification to the digital will.

A notice can also be received from the user. The user can provide the notice by inputting or updating information about a digital will component through the digital will user interface. For example, a user can update the age of a beneficiary through the user interfaces described below. Upon receiving the notification, the digital will may execute a rule in the event-driven rule based engine associated with the beneficiary and, for example, cause the digital will to automatically remove the guardianship provision. Thus, the digital will can update, in real-time, the components of the digital will that are affected by the trigger event.

In some embodiments of the invention, a user identifies his or her family members, and a default set of distributions is automatically generated based on general principles of intestacy. For example, a user can identify his or her spouse and two children, and default rules can be generated that allocate the user's assets to his or her surviving spouse, and if no spouse survives, then the children share the assets by right of representation. In some embodiments, the beneficiaries and default allocations can be pre-populated automatically based on information retrieved from social media network applications. For example, it can be determined that the user has a spouse and children based on information retrieved from a social media network. The information retrieved from the social media network can also be used to automatically identify and name the first user's beneficiaries.

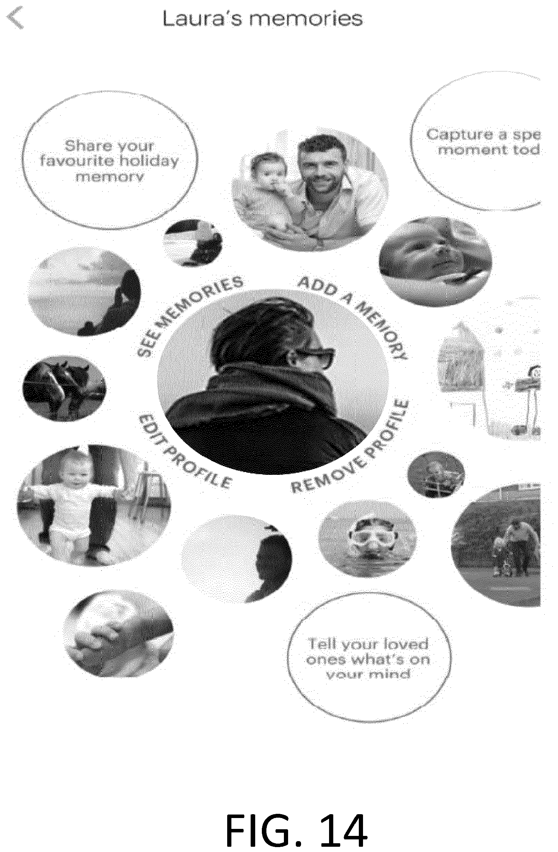

Events and rules that pertain to the beneficiaries, executors, or assets can be added to the digital will with a user interface like the page described above and as shown in Figures 13-14 that enables a user to visually identify individuals relevant to the digital will. The page for adding events and rules for the event-driven rule-based engine allows a user to upload media and metadata related to the assets and individuals that are implicated by the rules or events from a user's device, or an external network or database, such as a social media network or third party site. If an event is a beneficiary graduating from college, for example, a user can upload media showing a college graduation ceremony.

The digital will can also include a list of funeral wishes. Funeral wishes may be, preferences relating to funeral arrangements, such as for example, whether the first user desires to be cremated, and, if so, where their ashes are to be stored or disposed of. Alternatively, they can include instructions as to whether the first user is to be buried, where the burial site should be located, what type of coffin is required, and whether and what type of headstone should be installed at the burial site. Funeral wishes can also include instructions relating to whether the user wishes to donate some or all of his or her body to medical science. Funeral wishes can also indicate whether and what type of memorial service will be held, identify bearers involved in the procession, whether any assets are to be left with the user's body when being buried, such as for example, a photo or belonging. When a user opts to hold a memorial service, the first user can identify one or more individuals to address the service and/or provide a eulogy, he or she can specify what will be read, and he or she can request any other type of rituals or features to have at the service.

In some embodiments of the invention, the information input by the user is transmitted to a digital will database. The digital will database can be a remote database residing at a digital will server or third party server, and accessible over a network connection. For example, the digital will can transmit the information to the digital will database when it is connected to the internet. The digital will can be configured to transmit information to the digital will database on a periodic basis, such as every week, any time the user adds or revises information in the digital will, or when a user selects a button (e.g., "Save," or "Upload").

In some embodiments of the invention, the digital will and any digital memories or digital mementos can be downloaded from the digital will database. For example, if a user has already uploaded the digital will from his or her desktop computer, he or she can then download a copy of the digital will to their mobile device. The digital will database can also provide information about the digital will and any digital memories or digital mementos through a web page. For example, a user can login to a legal service provider's portal from where he or she can view the digital will components, digital memories, and digital mementos. The digital will database can also provide information about the digital will and any digital memories or digital mementos through an API. For example, the contents of the digital will, and any digital memories or digital mementos can be exposed through a REST API and made accessible to third parties as JSON-formatted data. The digital will database and API can be secured and require authentication and/or verification before providing any of the requested information.

In some embodiments, changes or updates to the digital will can be made from separate devices. For example, a user can begin making edits to the beneficiaries of the digital will from a mobile device, and before finishing that set of changes, begin making edits to the assets of the digital will from a desktop computer. The digital will server can reconcile differences between the information stored on the separate devices, and synchronize the digital wills so that the information on each device is consistent and uniform. For example, the mobile device will receive the edits concerning the assets made on the desktop computer, while the mobile device will receive the edits concerning the beneficiaries.

In some embodiments of the invention, a digital will database can include relevant state statutes, court decisions and agency decisions and guidelines that can be maintained to ensure that the operative language used in the digital will accounts for recent developments and changes in the law. For example, if a court determines that a particular term or clause is legally invalid or unenforceable, the digital will database can flag any digital wills containing similar terms or clauses. An update can be initiated that automatically identifies those digital wills and automatically replaces the flagged language with terms or clauses that would be compliant in light of the decision. The update can also send a notification to the digital will informing the user of the decision, how it impacts their digital will, and requesting their approval to replace the flagged language with new terms or clauses. Similarly, if a state passes a new law adding or removing requirements that apply to the formation and enforceability of wills (including digital wills), or the laws of testacy, the digital will database can be updated to reflect the changes, and an update can be initiated as described above. Where the digital will requests approval from the user to modify the language, the digital can display a prompt for each clause or term that has been revised and request the user to accept or reject the revision prior to implementing any change. The update can also cause the digital will to request a new signature from the user. For example, the digital will can display a prompt notifying the user of the update, and then directing the user to a field where they can provide a signature as described in further detail below.

As the user identifies and configures the components of the digital will, relevant terms and clauses can be identified in the digital will database automatically and in real time. For example, if a user defines a distribution of an asset to a beneficiary, the relevant terms and clauses for effectuating the distribution is searched for and identified in the digital will database. The digital will can retrieve the relevant terms and clauses and incorporate them into an electronic document that is continuously being generated and that can be printed and viewed as an entire will. For example, after retrieving the relevant terms and clauses for effectuating the distribution, the digital will can create a MS Word or pdf document showing the relevant terms and clauses in an entire will. In some embodiments, the digital will can show only the relevant terms and clauses that have been generated. In other embodiments, the digital will can show the relevant terms and clauses in addition to any other terms and clauses that have been created for the entire will. The digital will can add visual annotations or markers, such as for example highlighting or underlining, to the relevant terms and clauses to distinguish them from the other terms and clauses in the entire will. While the digital will can create a MS Word or pdf document for viewing or printing, in some embodiments, the relevant terms and clauses can be displayed and printed on a page formatted for the user's device. For example, if the user's device is a smartphone, the relevant terms and clauses can be shown on a page of a mobile app, having a menu option from which the user print the contents of the page. This can be done automatically and in real time as the user adds or updates information into the digital wills.

According to some embodiments of the invention, the digital will can be stored locally or in a remote digital will database. The digital will database can be indexed and searchable by one of several different search parameters. For example, a digital will can be searched according to the e-mail address associated with the user. A digital will can also be searched for by the one or more beneficiaries, executor, or other parties named in the digital will. A digital will can also be searched by the assets, triggering events, rules, or any other clauses provided in the digital will.

In some embodiments, the digital will can be stored and managed in a persistent memory storage coordinator. The information associated with the digital will components can be represented as one or more managed objects that save the information persistently in a device, or across multiple devices. The last-saved value of any information associated with a digital will component can be translated and incorporated into the one or more managed objects. The values can be stored persistently in a device by writing the information to a file, such as for example, a binary, XML, or SQLite file that is stored locally or in a remote database. The values can also be saved in an in-memory store. The persistent memory storage coordinator maintains the managed objects so that they can persist in local or remote storage even when a user is not interacting with the digital will. For example, if the digital will is implemented as an application running on a mobile device or computer, when the application is no longer running in the background and has been closed, the last-saved values entered by a user can still be retrieved when the user later launches/interacts with the program. The persistent memory storage coordinator can be implemented using multi-threading. In this way, the database can be accessed and used in the background so that large database operations do not freeze the user interface while the user is interacting with or providing input to the digital will.

In some embodiments, the persistent memory storage coordinator can be used to facilitate the input of data on a mobile or computer device with intermittent or poor internet and/or network access. When the digital will receives information or updates related to a digital will component such as a beneficiary, an asset, a distribution or rule or event, or any digital content associated with the foregoing, the digital will can attempt to immediately transmit the information or updates to a database. If the network or internet connection is poor, or the user's mobile device or computer is otherwise incapable of sending an update to the database, the digital will can determine that it is unable to transmit the information or updates to the database and temporarily store information or updates in a temporary memory storage. The digital will can then determine when it is capable of transmitting the information or updates to the database, by for example waiting for a fixed period, or continuously polling the connection until it is capable of transmission.

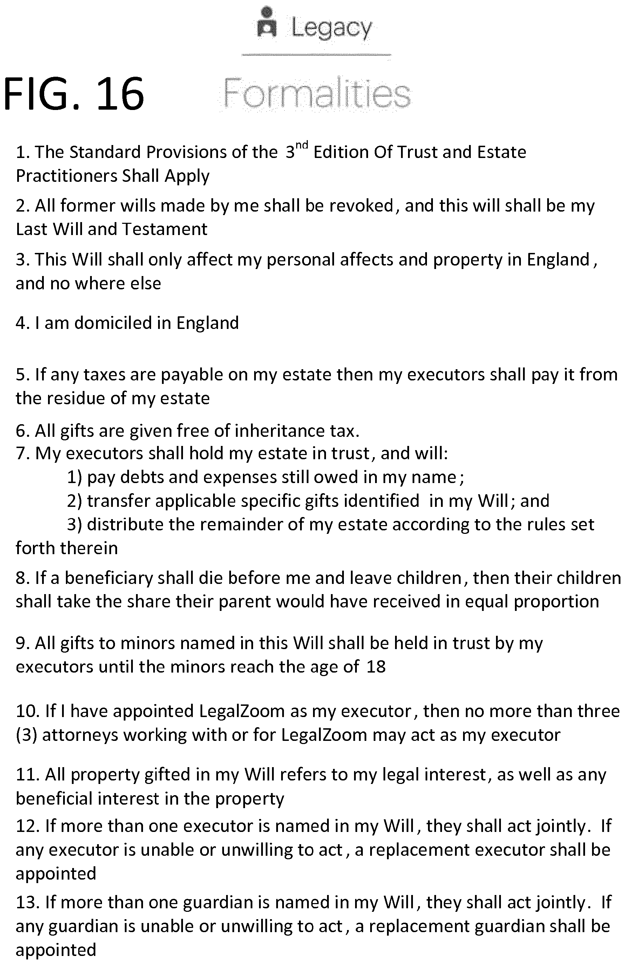

In some embodiments, the digital will can include one or more formalities that satisfy requirements under applicable laws or rules as shown in Figure 16. Formalities can include, for example, which state law or governing authority applies to the digital will, one or more testamentary declarations of the user, the user's signature, the signature of one or more witnesses, and any general rules to be applied to the assets, distributions, or beneficiaries. The testamentary declarations can be, for example, a declaration that the user meets applicable age requirements, a declaration of testamentary intent to make a document that functions as a will, a declaration of testamentary capacity that the user is of sound mind to create a will, that all former wills have been revoked, where the user is domiciled, and whether and how any relevant taxes are to be paid or disbursed from the estate.

Digital will formalities can also include rules for the event-driven rule-based engine that pertain to the beneficiaries, executors, or assets as discussed above. The formalities can provide rules for common scenarios or situations where the user did not specify any. For example, the formalities can specify that when a distribution is made to a minor, it is to be held in trust by an executor until the beneficiary reaches the age of 21.

The user interfaces for identifying individuals, assets, distributions, rules and events that are implicated in the digital will can be navigated in a non-linear fashion as shown in Figure 13. A user can jump between the different components of the digital will, such as the identification of beneficiaries, identification of assets, specification of distributions, and definition of rules and events in the order they choose. For example, a user can begin by identifying a beneficiary, then jump to defining a rule relevant to the beneficiary, and then jump to identifying the assets implicated by the rule. Thus, unlike conventional intake systems and methods that rely on the use of questionnaires, the user can navigate between the components of a digital will in a non-linear fashion.

Navigation between the different components of the digital will can be facilitated through the use of a dynamic non-linear menu or guided user interface. The dynamic non-linear menu or guided user interface detects whether there are any components of the digital will that are related to the current information the user is inputting, and provides the user with a button or link to the related digital will components. For example, after identifying a beneficiary, the digital will can prompt the user if they would like add more beneficiaries, or if they would like to set up a rule or event related to the beneficiary. Likewise, if a user is defining a rule or event, the digital will can prompt the user to identify a beneficiary or asset that is named in the rule or event, or if the user would like to add or delete additional rules or events. If there are no beneficiaries or assets that have been identified yet, the user interface can notify the user and prompt him or her to begin creating these digital will components.

The user interface can allow users to input information about digital will components by importing them from a third party network, application, or external or internal database. The user can import information from a third party network or application for example as he or she is viewing or browsing information from the third party network or application. For example while browsing a social media network application (e.g., Facebook) or a financial institution application (a bank's mobile application), the user may see information relevant to a component in the digital will, and decide to add digital will components using the information he or she is currently viewing or browsing. Thus, if the user is viewing a bank account, he or she can decide to import the account into the digital will as an asset. The user interface can provide a button that allows the user to select and/or import the information being viewed into the digital will. Similarly, if the user is viewing a profile of a family member or friend on a social media network application or site, the user interface can provide a button that allows the user to import information about the family member or friend as a beneficiary, executor, or similar individual being named in the digital will.

The user interface can prompt the user to continue adding components of the digital will, such as for example, the assets, executors, guardians, trustees and other individuals and things named in the digital will until there are no more digital will components for the user to identify. The user interface can prompt the user if there are any more components he or she would like to add. If the user is done, the digital will can check if there are any missing or incomplete components. For example, the digital will can determine if there is a rule that is still missing a beneficiary or asset. Similarly, the digital will can determine if there is a beneficiary that is still missing information, such as for example, his or her address, or contact information. As described below, the user interface can also provide a review page that allows the user to review the digital will as a whole and determine if there is any information that needs to be added, revised, or removed.

In some embodiments of the invention, the user interface can provide a review page from where the user can review the digital will as a whole and the information that has been provided thus far. The review page can display information in different ways. For example, the review page can display the digital will as a legal document and the names of the beneficiaries and assets shown where appropriate. It can also display the distribution rules and events worded as legally operative clauses and terms. The review page can also display the digital will components visually with graphics rendering objects and textual elements. For example, the beneficiaries can be displayed as photos, videos, or other media inside their corresponding bubbles. The graphics rendering objects can be interactive such that when a user taps on a beneficiary, the review page can show any assets, distribution rules or events, or any other digital will component that is implicated or related to that beneficiary. The related digital will components can be shown as a pop-up window or menu, for example, such that when the user taps on the pop-up it redirects the user to more detailed information about the digital will component. The pop-up window or menu can also allow the user to edit the information about the component. The review page can also show relationships to other beneficiaries, assets, and digital will components with lines, arrows, and other graphical elements. These lines, arrows and graphical elements can be similarly interactive, and show more details about the relationships between the digital will components when selected by the user.

The review page can also display the digital will components organized into editable fields where the user can make direct edits and revisions. For example, the review page can show each beneficiary and their contact information as text entry fields that the user can directly edit.

Viewing the digital will as a whole, including its digital will components, the user can determine if the digital will is in final form for submission. The review page can provide a "Review" or "Submit" button for example that prepares the digital will for submission. Selecting the button can cause the digital will to perform one or preliminary checks to determine if information is still missing or complete. For example, the digital will can review the information provided by the user and determine that a beneficiary is missing contact information, or a distribution rule or event is missing a beneficiary or asset. The review page can indicate what information is missing visually with a graphics rendering object showing a flag, caution sign, or similar icon. It can also be indicated visually by for example, with coloring or textual mark-up, such as red underlining.

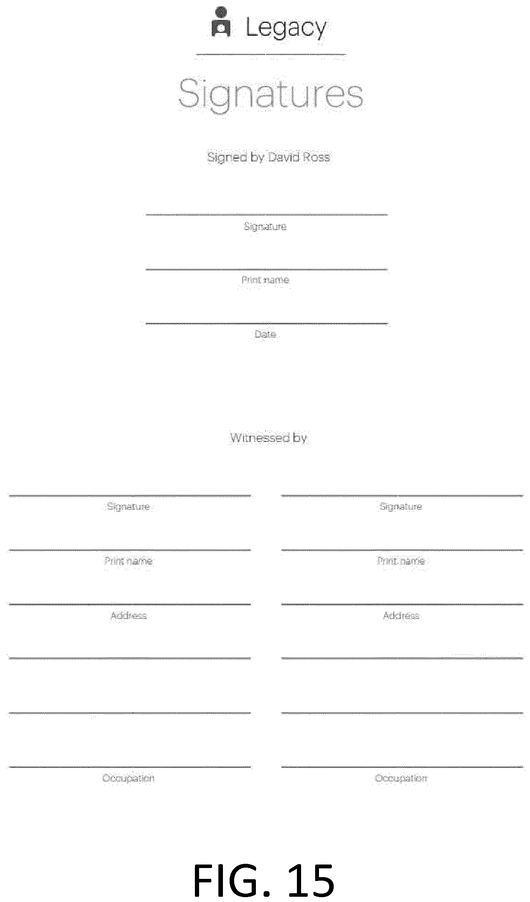

A digital will that has been completed can be signed or executed by the user and any other individual with a signatory role in the digital will as shown in Figure 15. The digital will can be signed before submission for review, or after the digital will has been reviewed, as described in more detail below. In some embodiments, the digital will includes a digital field for receiving a signature. The digital will can be printed for the user to sign and scan. The digital will can also be signed electronically using a digital signature. The digital signature can be a signature created using stylus- or finger-based capacitive input on a mobile device or computer. For example, the signature can be created using an Apple pencil on an iPhone or iPad. A digital signature can also be a passcode, image, biometric input, such as a fingerprint scan, or similar input. In some embodiments, the signing of the digital will can be electronically recorded as a means of providing authentication of the signature. For example, a video can be recorded of the user signing the digital will. The video can then be stored with the digital will and used to satisfy certain state authentication requirements. Other examples of electronically recording the signing process include taking photographs of the signing, obtaining an audio clip of the user (e.g., verbally confirming that he or she is signing the digital will), or other similar means for electronically capturing the event. The user can send a request to other individuals that have a signatory role in the digital will. The request can be sent electronically, for example by e-mail, text, in-app push notifications, and similar means. Those individuals can then likewise provide a digital signature for the digital will. The digital signature can be provided to the user, directly to a digital will database, or to a legal service provider who will review the digital will.

In some embodiments, when the digital will has been signed, the digital will becomes locked. When the digital will is locked, users and third parties are unable to change or modify the digital will unless otherwise provided for in the digital will settings. The digital will settings can allow the user to specify other settings related to the delivery, management, and execution of the digital will, as well as any other operational settings related to the user's account. For example, the digital will settings can provide a page whereby the user can specify the electronic means that the user and other individuals named in the digital will receive notifications. The page can also allow a user to set or reset account properties, such as passwords or payment methods.

In some embodiments of the invention, the digital will can be submitted to a legal service provider for review. The digital will can be submitted to the legal service provider electronically, by for example, e-mail, text, formatted data requests, or similar means. For example, the digital will can be translated into a JSON-formatted object and submitted via internet GET or POST methods to an API of the legal service provider. The digital will can also be converted into a printable document showing the digital will components as text, such as a .pdf, .word, .txt, .csv, or .xls file, and sent by e-mail.

One or more reviewers of the legal service provider can review the digital will and create it as an approved electronic document containing all operative and applicable legal terms and clauses. The approved electronic document can be sent to the user electronically by for example, e-mail, text, formatted data requests, or similar means. The approved electronic document can be transmitted as a data object (e.g., JSON-formatted object) or printable document (e.g., .pdf) as described above. The approved electronic document can include comments to the digital will, a set of instructions and/or personalized terms and conditions. The set of instructions and comments can explain to the user whether there are errors in the digital will, the significance of certain terms or clauses, or how to complete or sign certain fields in the digital will. In some embodiments, the instructions and comments can include redlines, tracked changes, and similar markup showing changes that have been made or suggested in comparison to a previous version of the document. The set of instructions and comments can also request the user to reenter information that is invalid or illegible, such as for example, inconsistencies in different parts of the digital will, or entries that are illegible or unclear from the reviewer. The set of instructions can be a separate file that a user can open and view separate and apart from the digital will, or it can be viewed as annotations to the terms, clauses, and/or pages that they correspond to. Users can view the instructions as annotations by selecting one or more menu or interface options for each term or clause, or can configure a setting that toggles between viewing the entire digital will with or without instructions.

While several embodiments described above provide a way for the digital will to be reviewed, in some embodiments, a digital will can be signed absent any review or approval from a legal service provider. For example, the digital will can skip the approval process described above and navigate the user directly to a digital field to the user for receiving a signature. In further embodiments, a legal service provider can provide review only when there has been an update or change to the digital will or law in which case the user may desire the assistance of an attorney. In some embodiments, legal service provider review can be optional such that the digital will prompts the user if he or she would like the digital will to be reviewed.

In some embodiments, a user can receive in real-time communications from the legal service provider or a third party consultant regarding a digital will component. For example, the legal service provider can send a communication to the user advising him or her on the enforceability or disadvantages of a trigger event. The communication can be in the form of a video conference, an audio conference, an email, an instant message, a text message, or similar form of communication.

The personalized terms and conditions can also be a separate file that the user views separate and apart from the digital will. The terms and conditions can request the user to agree to certain terms before using or proceeding with the digital will. The terms and conditions can include a prompt, such as a checkbox or submission button, whereby the user affirmatively confirms or rejects their assent to the terms and conditions. The terms and conditions can be personalized based on the applicable state law, the type of digital will being drafted, the amount of money in the estate, or the type of assets or information discussed in the digital will. For example, the terms and conditions can include terms and/or clauses that request the user to confirm the accuracy and veracity of the information provided in the digital will. The terms and conditions can include one or more privacy policies and disclaimers. For example, the terms and conditions can include a disclaimer that the process of creating, or the use of the digital will does or does not create an attorney client relationship, unless and to the extent some embodiments will include attorneys in the review of the digital will as described above. As another example, the terms and conditions can include a privacy policy describing how the information provided in the digital will be treated.

If there are any changes the user has provided in response to the review, such as for example, addressing errors or re-crafting distributions/trigger events that are invalid or illegible, the user can be brought to a page where he or she can re-submit the digital will. If there are no further changes or revisions that are needed from the user, the digital will can be executed and finalized. The user can select a "Finalize" button that will convert the digital will into an electronic document, such as a data object (e.g., JSON-formatted object) or printable document (e.g., .pdf) as described above. It can also send a copy of the electronic document back to the legal service provider to take any other action necessary to complete the process, such as for example, sending copies to individuals named in the digital will, filing copies with governmental agencies, or storing it in a vault.

In some embodiments, the digital will can be stored in a vault. The vault can be electronic or physical. Where the vault is physical, paper copies of the digital will can be stored for safekeeping. Where the vault is electronic, it can be secured with encryption, password protection, two factor authentication, and similar security measures. Access to the vault can be provided to individuals specified by the user. For example, the user can determine that certain beneficiaries can have access to the vault, and as such, an account is created for these beneficiaries. The vault can store the entire contents of the digital will or a subset of information, such as that only pertaining to the asset bequeathed to the beneficiary. The vault can be configured such that the user can view the information pertaining to the asset, and this information would not be visible to anyone else. In some embodiments, the vault can be held by a custodian. Custodians can be third parties, qualified custodians, designated custodians, and other such third parties set forth in applicable laws.

According to some embodiments of the invention, the status of the digital will can be tracked and queried. The digital will can be in one of several stages of the drafting and filing process, such as for example, being drafting, completed, and signed or e-signed. A user can request the status of the digital will during any of these stages. A user can also partially complete the digital will and save his or her progress in a particular stage of the process. The next time the user logs in, he or she can pick up where they left off and fill in the remaining information. According to some embodiments, the digital will can be searched by status. For example, a user can search for digital wills that are incomplete, or waiting to be signed.

In some embodiments of the invention, when a user has left the digital will in a stage of incompletion for an extended period of time, reminders can be sent to the user prompting him or her to finish the digital will. Reminders can be transmitted by e-mail, texts, in-app notifications, or similar means. Reminders and notifications can also be sent to confirm when a stage has been completed, such as for example, when the digital will has been signed or e-signed, when the legal service provider has finished conducting its review (for embodiments where the digital will is reviewed), when it has been determined that information in the digital will is incorrect or missing, when terms and conditions have been updated, or when payment has been received. Notifications and reminders can also be sent when triggering events occur, when assets get distributed, or significant dates, such as for example an anniversary of a memory.

A representative or team of the legal service provider can be provided with access to the digital wills to facilitate customer service. For example, the representative or team can assist a user in resetting a forgotten password, adjusting digital will settings, answering questions about a user's payment, and assisting with other queries or issues relating to the user's account or technical difficulties.

In some embodiments, the digital will can provide a screen that provide a prompt or window, or series of prompt or windows to ensure the user is of proper sound, mind, age or will to enter or update information in the digital will. For example, before making updates or revisions, the digital will can prompt the user to solve an algebra equation, identify images or numbers in a screen, or solve similar puzzles before logging into the digital will, or making any changes. As another example, the digital will may require two-factor security authentication processes (sometimes also referred to as two-step or multi-factor authentication) before logging into the digital will or making changes. A two-factor or two-step security authentication process can include for example first providing a username/password as a first factor and then providing a temporary, single-use numeric code generated by, for example, Google's Authenticator. In this way, the digital will can ensure that the correct person is signing the digital will, thereby reducing the risk of having a fraudulent will.

In some embodiments of the invention, the digital will can operate with multiple languages. The digital will can receive input from the user in multiple different languages, and display the digital will in a variety of different languages. A user can, for example, input information in English, and share it with a beneficiary or executor in a different language such as Spanish.

One aspect of the invention provides a computer readable medium, the computer readable medium comprising computer-executable instructions which, when executed by a computer, perform a method as described herein, including as set forth in the accompanying claims.

Disclosed herein are devices, systems, apparatuses, methods, products, and other implementations for the non-linear integration of digital will components and corresponding digital content using an event-driven rule-based engine. One or more beneficiaries, executors, and assets can be identified using a dynamic scrollable mosaic. An event-driven rule-based engine is configured to determine how the one or more assets are distributed to the one or more beneficiaries based on one or more sets of rules. The identification of the one or more beneficiaries, one or more executors, and one or more assets, and the configuration of the event-driven rule-based engine is received from the user in a non-linear fashion. In real-time, a digital will can be generated that specifies how to distribute the one or more assets to the one or more beneficiaries. When a notice of one or more trigger events is received, the digital will can be updated in real-time.

## Claims

1. A method for non-linear integration of digital will components and corresponding digital content that uses an event-driven rule-based engine having a dynamic scrollable mosaic that reduces memory consumption and optimizes processor performance, comprising:
receiving, at a processor, an identification of one or more beneficiaries using the dynamic scrollable mosaic;
receiving, at a processor, an identification of one or more executors using the dynamic scrollable mosaic;
receiving, at the processor, one or more assets associated with a first user and for distribution to the one or more beneficiaries using the dynamic scrollable mosaic;
receiving, at the processor, digital content associated with the one or more beneficiaries, the one or more executors, and the one or more assets using the dynamic scrollable mosaic;
configuring, at the processor, an event-driven rule-based engine that determines how the one or more assets are distributed to the one or more beneficiaries based on one or more sets of rules;
wherein the identification of the one or more beneficiaries, one or more executors, and one or more assets, and the configuration of the event-driven rule-based engine is received from the first user in a non-linear fashion;
generating, in real-time, a digital will that specifies how to distribute the one or more assets to the one or more beneficiaries using the event-driven rule-based engine;
receiving a notice of one or more trigger events; and
updating, in real-time, the digital will based at least in part on the one or more trigger events.

2. The method of claim 1, wherein the dynamic scrollable mosaic converts media associated with the digital content into memory-optimized formatted media and uses the memory-optimized formatted media for displaying to a user.

3. The method of claim 1 or 2, wherein the identification of one or more beneficiaries comprises data representative of a family unit, wherein the family unit comprises one or more family members, and information describing a relationship between the one or more beneficiaries and a first user, wherein the relationship is a genealogical relationshi p.

4. The method of claim 1, 2 or 3, further comprising receiving, at a processor, an identification of one or more guardians.

5. The method of any preceding claim, wherein a vault is created for each beneficiary named in the digital will as receiving an asset, wherein the vault is secured and enables a first user to store information pertaining to the received asset and enables a beneficiary to view the information pertaining to the received asset.

6. The method of any preceding claim, further comprising:
determining that information of a digital will component exists in a database; and
receiving, at a processor, the information of a digital will component from the database and automatically incorporating the information of the digital will component into the digital will.

7. The method of any preceding claim, further comprising:
determining that information of a digital will component exists in a social media network; and
receiving, at a processor, information of a digital will component from the social media network and automatically incorporating the information of the digital will component into the digital will.

8. The method of any preceding claim, further comprising associating the digital content with metadata and, optionally, displaying the digital content in a selectable storyline according to its associated metadata.

9. The method of any preceding claim, further comprising sharing digital content with the one or more beneficiaries based on a trigger event and one or more sets of rules.

10. The method of any preceding claim, further comprising requesting an update to the digital will based upon a trigger event and one or more sets of rules.

11. The method of any preceding claim, wherein the processor is configured to:
receive updates to add, remove, or edit one or more beneficiaries, and
upon receiving an update, request the first user to update the digital content, assets, or distributions relating to the updated one or more beneficiaries.

12. The method of any preceding claim, wherein the processor is further configured to:
receive updates related to a digital will component;
attempt to transmit the updates to a database;
determine that the processor is unable to transmit the updates to the database; and
store the updates in a persistent memory storage coordinator until the processor determines it is capable of transmitting the updates to the database,
and, optionally, wherein the persistent memory storage coordinator incorporates last-saved values of a digital will component as a managed object that is stored in a local file.

13. The method of any preceding claim, further comprising:
receiving a request to submit the digital will to a legal service provider for review;
transmitting the digital will to the legal service provider;
receiving an approved electronic document from the legal service provider;
receiving a signature from the first user;
storing the digital will as an electronic document in a vault;
and/or
receiving, in real-time, a communication from a consultant regarding the one or more trigger events; and
updating, in real-time, the digital will based on the communication from the consultant.

14. A system comprising:
one or more processing modules; and
one or more non-transitory storage modules storing computing instructions configured to run on the one or more processing modules and perform acts of:
receiving, at a processor, an identification of one or more beneficiaries using the dynamic scrollable mosaic;
receiving, at a processor, an identification of one or more executors using the dynamic scrollable mosaic;
receiving, at the processor, one or more assets associated with a first user and for distribution to the one or more beneficiaries using the dynamic scrollable mosaic;
receiving, at the processor, digital content associated with the one or more beneficiaries, the one or more executors, and the one or more assets using the dynamic scrollable mosaic;
configuring, at the processor, an event-driven rule-based engine that determines how the one or more assets are distributed to the one or more beneficiaries based on one or more sets of rules;
wherein the identification of the one or more beneficiaries, one or more executors, and one or more assets, and the configuration of the event-driven rule-based engine is received from the first user in a non-linear fashion;
generating, in real-time, a digital will that specifies how to distributes the one or more assets to the one or more beneficiaries using the event-driven rule-based engine ;
receiving a notice of one or more trigger events; and
updating, in real-time, the digital will based at least in part on the one or more trigger events.

15. The system of claim 14,
wherein the dynamic scrollable mosaic converts media associated with the digital content into memory-optimized formatted media and uses the memory-optimized formatted media for displaying to a user;
and/or
wherein the system further comprises a persistent memory storage coordinator that stores updates to a digital will component and determines when the processor is capable of transmitting the updates to a database;
and/or
wherein the system further comprises a persistent memory storage coordinator that incorporates last-saved values of a digital will component as a managed object that is stored in a local file.
